# EUROPEAN PATENT APPLICATION

(11) **EP 1 773 041 A1**
(43) Date of publication of application: **11.04.2007**
(21) Application number: 05015889.8
(22) Date of filing: 21.07.2005
(51) Int. Cl.: H04M 7/00, H04L 12/28

(54) **Audio/video data transmission system using the internet to interconnect telephones**

(71) Applicant: Wu, Chao-Hung, Hsin-Tien City, Taipei (TW)
(72) Inventor: Wu, Chao-Hung, Hsin-Tien City, Taipei (TW)
(74) Representative: Viering, Jentschura & Partner

(57) **Abstract**

A mobile audio/video data transmission system and method for the same, and more particularly to a voice over IP (VoIP) device and its method for transmitting digital signals structured in IP packets is are described. The system uses a plurality of computers and telephone devices at receiving and transmitting terminals. Message exchange platform software is installed on the computers, having at least a mobile AV data conversion device. The transmitting and receiving terminals must use a plurality of mobile communication device and are connected to the telephone device through the telephone network. In the method of transmitting the mobile AV data according to this invention, the AV data is transmitted from the mobile communication device with Internet access to an AV I/O device through the mobile AV data conversion device, or transmitted to the mobile communication device from the computer through the mobile AV data conversion device.

## Description

### BACKGROUND OF THE INVENTION

### 1. Field of the Invention

This invention relates to a mobile audio/video (AV) data transmission system and method for the same, and more particularly to a mobile AV data conversion device working with an indoor telephone device to transmit data from a mobile communication apparatus to a PC or from the PC to the mobile communication apparatus.

### 2. Description of Related Art

A VoIP (Voice over IP) telephone compresses voice signals into data packets and then provides a voice service on the basis of Internet protocol, thus providing a telecommunication voice service. Internet is used not only to provide the real-time voice service, but also to connect people to together all over the world. Users are not required to use the public switched telephone network (PSTN) any more for long-distance calls.

VoIP transmits in real time original analog voice signals in a data packet on IP network format. The VoIP system digitalizes the signals and then provides an end-to-end real-time communication function following all related communication protocols on the network. By means of VoIP technology, the distortion, echo, and data packet loss transferred on the network may be properly fixed for high fidelity.

In practical use, VoIP is classified as PC to PC, PC to telephone, and telephone to telephone. For PC to PC, network-based communication software, such as Skype and Net2Phone, is run on the PC. If a receiving party and a calling party have the software, real-time talk with each other is available. For PC to telephone, after the PC on which the software is run connects the Internet to VoIP equipment provided by a provider, the PC user may talk with another terminal on a home telephone. For telephone to telephone, a calling party directly dials a provider's VoIP equipment, the equipment connects a receiving party's local VoIP equipment through the network, and then the local VoIP equipment dials a telephone number of the receiving party through the local telecommunication network for talk on both sides.

When VoIP is used, both parties must connect to the Internet and have a fixed IP address. Both parties' facilities then send data to each other. Obtaining an IP address is thus a precondition for VoIP use. If both parties' IP is not obtained, mutual communication is not possible.

VoIP serves as a low-priced alternative plan for long-distance telephone, and because most media, except voice, work on IP, related services of linking voice to data, such as making a phone call to listen to e-mail (E-Voice), are favored by the public.

In a prior art, a portable web phone device connecting a data network, a telephone switching system, and a telephone set is disclosed in Taiwan Patent No. 530473, titled "Portable Web Phone Device".

In Taiwan Patent No. 512619, titled "Voice from a Voice System on the Basis of Internet Protocol", a voice application used on voice over IP, achieved by sending voice messages over IP, is disclosed.

However, the VoIP communication service described in the prior art is provided by a system provider. Through uplink PCs provided by a provider that connect the Internet to downlink PCs of another terminal connected to local switching systems, telephone subscribers transmit voice packets over network.

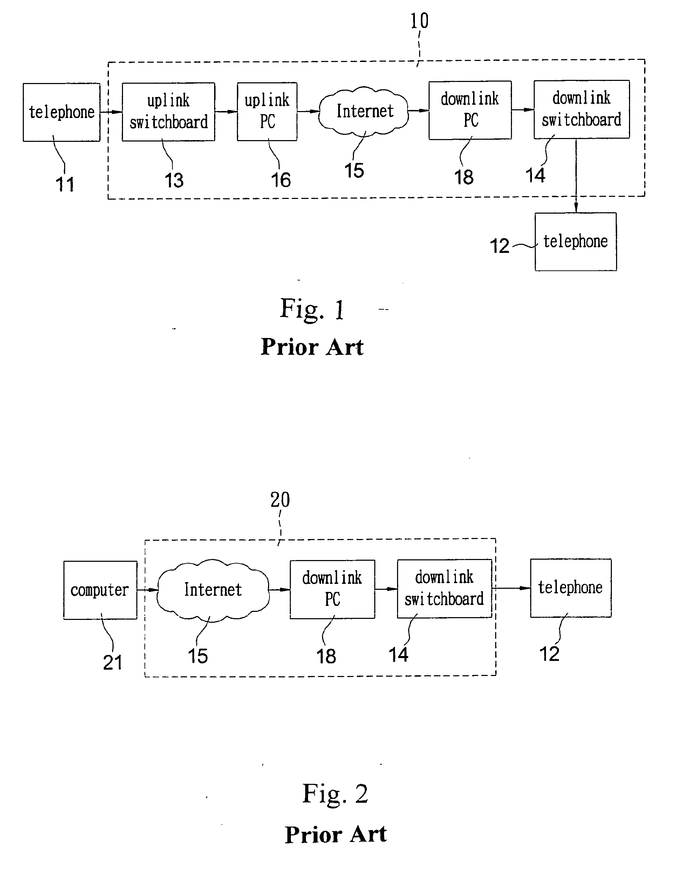

Reference is made to Fig. 1 for application of the prior art of a conventional phone-to-phone VoIP system structure. A user uses a telephone 11 and dials a telephone 12 of another terminal through the Internet to save money. A charge system 10 in the figure is necessary.

The user uses the local telephone 11 to dial the charge system 10 so as to connect to Internet 15 from the uplink PC 16 through an uplink switchboard 13 provided by a system provider, and then connect to a telephone switching system indicated by a local downlink switchboard 14 from a downlink PC 18 to dial a destination telephone 12. The telephone 12 may be a mobile phone or a home telephone device. The charge system 10 generally comprises, for example, a commercial telephone switchboard or a PC server connecting to the Internet to transfer an inbound communication signal to the telephone switching system between two sides.

Fig. 2 shows a prior art applied to PC to phone. A suite of network communication software installed in a PC 21 is used to connect the PC 21 to the telephone 12 through the Internet. However, a charge system 20 must be used by a system provider to connect the Internet to the downlink PC 18 and next to the downlink switchboard 14 so that data packets sent on network are converted into general analog voice signals, before the receiving party can answer the telephone 12.

As shown in Fig. 1 or 2, if the user wants to make a long distance call, such as other country or other city, the user must pay the local telecommunication bill and that of another location. The user must further pay the system provider a certain fee because the system provider provides the charge system 10,20 for commercial pursuits to make a profit from the user.

However, in this invention, a mobile AV data conversion device as the VoIP device is used to connect the home telephone device, while other communication devices may connect the Internet to a communication device of another location for communication and data transfer.

### SUMMARY OF THE INVENTION

In view of the defects of the prior art, this invention provides a mobile audio/video (AV) data transmission system and a method for the same.

It is an object of this invention to provide the mobile audio/video (AV) data transmission system and a method for the same, which transmits AV or voice data through a mobile AV data conversion device to an AV I/O device from a mobile communication device such as, for example, a mobile phone, to a mobile phone from a PC, or to a mobile phone from a mobile phone. The mobile AV data conversion device according to this invention is installed on a local personal, home, or office telephone device, or that of another location, to reach a conventional communication service provided by a system provider for saving money and achievement of personal mobile AV communication.

In order to achieve the object, this invention provides a mobile audio/video (AV) data transmission system comprising computers for transmission or reception, in which a suite of message exchange platform software is provided in the computers connected through the Internet. Further telephone devices of both sides are electrically connected to networking computers. Each of a plurality of mobile AV data conversion devices comprise a signal conversion module embedded in the mobile AV data conversion devices electrically connected with the computers and the telephone devices. A plurality of mobile communication devices is connected through a plurality of telephone networks and the telephone devices.

When transmitting data, the transmitting computer generates AV contents to be transmitted to the receiving computer. A mobile AV data conversion device is used to convert the signals, transmit the AV call to a receiving terminal, and detect a setting status of the receiving terminal. AV or voice data is extracted out of the AV call. The converted AV or voice data is transmitted. A receiving status of the receiving terminal is detected. The phone is then answered, or a file is downloaded.

In another embodiment, a mobile communication device is first connected to the telephone device to transmit a piece of AV or voice data. The mobile AV data conversion device converts the data into a format. The transmitting computer receives the data and detects the status of the receiving computer. The transmitting computer then transmits the data to the receiving computer.

The receiving devices may be a portable computer connected to the Internet. The AV signal is transmitted through the Internet to save money.

### BRIEF DESCRIPTION OF THE DRAWINGS

The foregoing aspects and many of the attendant advantages of this invention will be more readily appreciated as the same becomes better understood by reference to the following detailed description, when taken in conjunction with the accompanying drawings, wherein:
Fig. 1 is a view of a VoIP system structure used conventionally for a telephone to a telephone of the prior art;
Fig. 2 is a view of a VoIP system structure used conventionally for a PC to a telephone of the prior art;
Fig. 3 is a schematic view illustrating a mobile AV data transmission system according to this invention;
Fig. 4A is a schematic view illustrating an embodiment of the mobile AV data transmission system according to this invention;
Fig. 4B is a schematic view illustrating a tabular transfer function according to this invention;
Fig. 4C is a schematic view illustrating status setting function of a receiving terminal according to this invention;
Fig. 5 is a schematic view illustrating a preferred embodiment of the mobile AV data transmission system according to this invention;
Fig. 6 is a flow chart of steps in a first embodiment of this invention;
Fig. 7 is a flow chart of steps in a second embodiment of this invention; and
Fig. 8 is a flow chart of steps in a third embodiment of this invention.

### DETAILED DESCRIPTION OF THE PREFERRED EMBODIMENTS

A conventional VoIP device converts an analog voice signal through a public branch exchange (PBX) into a voice packet for transmission through a public data network. The packet is transmitted to a receiving terminal, and may be converted again into an analog voice signal through a PBX of another terminal for reception a general telephone device or a mobile phone. Alternatively, both calling and receiving parties must have a VoIP telephone provided with a VoIP device. An IP address is configured and other settings are finished in advance, after which mutual communication is possible. The VoIP device achieves a real-time communication mode to save money.

Further, a mobile AV data transmission system according to this invention may convert AV or voice data through a mobile AV data conversion device such as, for example, a portable personal mobile device located wherever the user is. Two terminals of the device are connected to a computer with Internet access and a telephone device, respectively. The user may connect the telephone device to the computer through the mobile AV data conversion device to transmit AV or voice data on Internet.

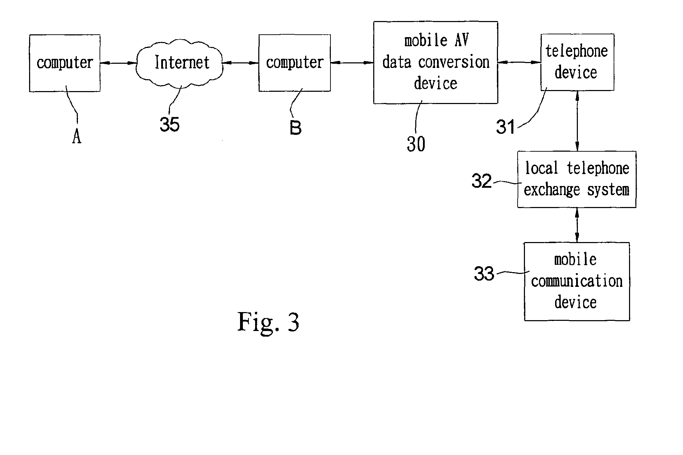

Fig. 3 is a schematic view illustrating a mobile AV data transmission system according to this invention. In the figure, a user of a transmitting terminal (not shown) uses a computer A to access the Internet 35. The Internet 35 connects computer A to a receiving terminal's computer B, which may further transmit received digital signals, including audio or video signals, to a mobile AV data conversion device 30. Mobile AV data conversion device 30 converts the digital signals into a plurality of analog signals, and then transmits them to a telephone device 31. The telephone device 31 may be a stand-alone telephone set or a telephone set through a PBX so that the user may answer the telephone device 31 or may dial a mobile communication device 33 used by a destination user through a local telephone switching system 32, such as PSTN, provided by a telecommunication corporation.

As illustrated in the figure, a charge system described in a conventional art is replaced with the mobile AV data conversion device 30, the telephone device 31, and the computer B. In other words, the user of the transmitting terminal conventionally pays for long-distance communication with the receiving party on the mobile communication device, but the mobile AV data conversion device 30 is installed on the receiving terminal. The transmitting terminal may transmit the AV data to the computer of the receiving terminal from the computer A through the Internet 35 to save money. The mobile AV data conversion device 30 converts the data into AV signals acceptable by the telephone device 31 and may further transmit the AV message to another mobile communication device 33 through the local telephone switching system 32.

In the communication process, the user pays only the telecommunication corporation providing the receiving terminal for long-distance communication by telephone or for AV data transmission. In the prior art, the user pays more money for the telecommunication bill.

The computer A and the computer B of the receiving terminal are provided with a suite of message exchange platform software and may comprise a suite of AV message-leaving software. When the computer A is ready to send an AV message-leaving to the user of mobile communication device 33, the AV message-leaving will be sent from the AV message-leaving software installed on the computer A through the Internet 35 to the AV message-leaving software on the computer B of the receiving terminal. The mobile AV data conversion device 30 is wired or wireless connected to the computer B and provided with an embedded signal conversion module through which a plurality of digital signals are converted into a plurality of analog signals or a plurality of analog signals are converted into a plurality of digital signals.

In another embodiment, when the user setup transfers to a mobile phone for an outgoing function, the AV message-leaving software transmits out an AV message-leaving through the setup on the message exchange platform software. At this time, the AV message-leaving is sent to the telephone device 31 according to the setup through the mobile AV data conversion device 30 and then transmitted from the telephone set through the local telephone switching system 32 to the mobile communication device 33, such as a mobile phone, so as to reach the function of non-real-time AV message-leaving.

In the embodiment mentioned above, the user of another terminal may also use the mobile communication device 33 or the local telephone device 31 through the mobile AV data conversion device 30 and use the computer B to access the Internet 35. The user finally receives the transmitted AV data from the computer A.

For example, a suite of AV scheduling software is set on the computer B. When a set time comes, the voice or AV data is transmitted through the mobile AV data conversion device 30 in Fig. 3 to the local telephone device 31 and the local telephone exchange system 32 connected to the mobile communication device 33 received by another user for schedule management and reminders provided by the AV assistant.

In a further embodiment, the user may use the keypad of mobile communication device 33 to input a default password to enter a local call or local extension of the telephone device 31. The voice signal is transmitted through the mobile AV data conversion device 30 to the computer B so that at this time the user may use the key input to the message exchange platform software for correspondence to a number of the receiving computer A, such as correspondence with an IP address or a MAC address. Computer B may then connect to computer A of the receiving terminal through the Internet 35. After connection, the user may use the mobile communication device 33 to communicate with another user on the receiving side on line. The transmitting terminal serves as local communication, thereby saving money in dialing to the receiving terminal.

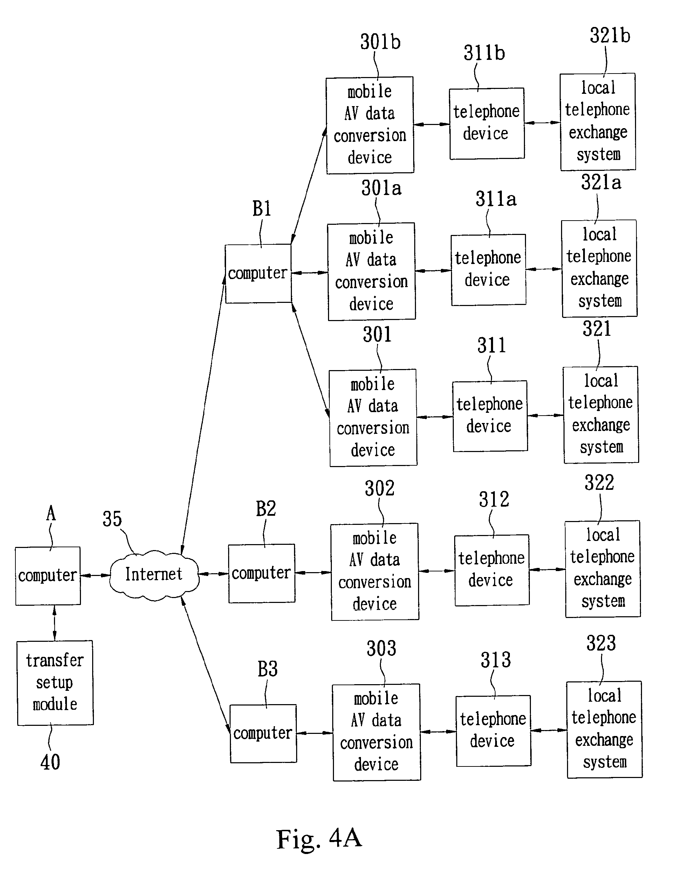

Fig. 4A shows another embodiment of this invention. For example, a configuration module with a transfer function is installed on the computer A, such as a suite of software. A message of PCs connected in each location is shown so that when the user calls a telephone in a certain location, the module is used to set a transfer destination. Computer A obtains access to the Internet 35. Under the structure of system, computers accessing the Internet 35 and located each location, such as the computers B1, B2, and B3 in the figure, are respectively connected to the mobile AV data conversion devices 301, 302, and 303, through which the telephone devices 311, 312, and 313 are connected to the computers B1, B2, and B3. The telephone sets may be general telephone sets used for outside telephone connections. According to this invention, the calling party and the receiving party may communicate with each other on the telephone through the local telephone switching systems 321, 322, and 323 from one side to another.

According to this invention, the AV or voice signal may be connected from the local telephone devices 311, 312, and 313 and the local telephone switching systems 321, 322, and 323 to the receiving terminal through the computer A, the Internet, the local computers B1, B2, and B3, and the mobile AV data conversion devices 301, 302, and 303. The user pays for only the long-distance communication bill of the local telephone system service to save money.

In the embodiment as shown in the figure, when the user of computer A wants to call a local telephone connected to the computer B1 located in a certain location, the user uses the plurality of mobile AV data conversion devices 301, 301a, and 301b connected to the computer B1 to call the local telephone switching system 321, 321a, and 311b through the telephone devices 311, 311a, and 311b. The data is then received by a local user. The mobile AV data conversion devices 301, 301a, and 301b may be connected to the computer B 1 through a communication port of a general PC, such as a USB port, while mobile AV data conversion devices 301, 301a, and 301b are connected to the local telephone devices 311, 311a, and 311b through a telephone line, such as RJ-11. The mobile AV data conversion device thus comprises the communication interfaces connected to the computer and the telephone set, respectively.

By setting the computer B1, the mobile AV data conversion device 301, and the telephone device 311 connected to the local telephone switching system 321 in a country where the Internet 35 is available, the user may use the transfer function of the computer A to access the Internet 35 at another location, and then transfer the AV or voice signal to the user in the country. The user transferring the signal pays only a small fee for Internet access and local telephone communication, thereby fulfilling the object of conserving money through the mobile AV data transmission system according to this invention.

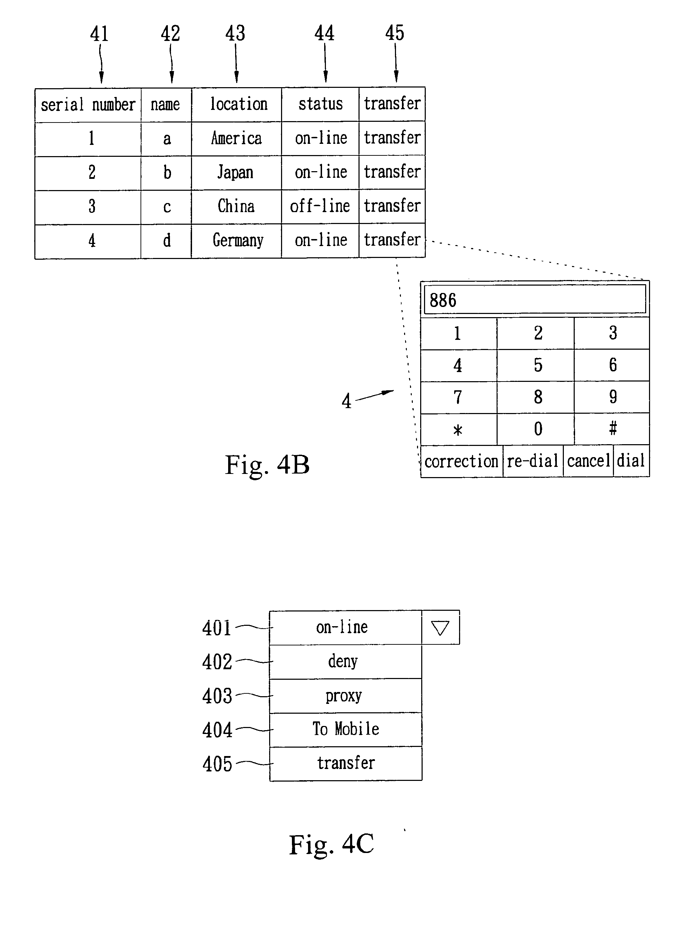

Fig. 4B is a schematic view illustrating a tabular transfer function according to this invention. In this figure, messages on the computer A connected to the computers respectively located in the USA, Japan, China, and Germany, include a plurality of columns of messages. For example, serial numbers are shown in a first column 41. Names of persons on line are shown in a second column 42 in order to show the user the on-line persons available for direct conversation. Locations are shown in a third column 43 in order to show the user a local telephone system. The status of computers is shown in a fourth column 44 shown as On-Line or Off-Line. A transfer button is shown in a fifth column 45, so that when deciding to dial a phone number of a location, the user may use the button to connect to the computer in the location. A virtual phone keyboard 4 is displayed for the user to dial the telephone number, comprising at least Correction, Re-dial, Cancel, and Dial. However, the transfer functions in the table are not limited by these examples.

Fig. 4C is a schematic view illustrating status setting function of a receiving terminal according to this invention. A status setting used at the receiving terminal, as shown in the figure, comprises at least On-Line 401, Deny 402, Proxy 403, To Mobile 404, and Transfer 405. The person at the receiving terminal may use one of the settings depending on an actual status. Besides, when the transfer function is enabled, a user ID may be correspondingly determined for the source of transfer. If identified, the person or member may use the transfer function.

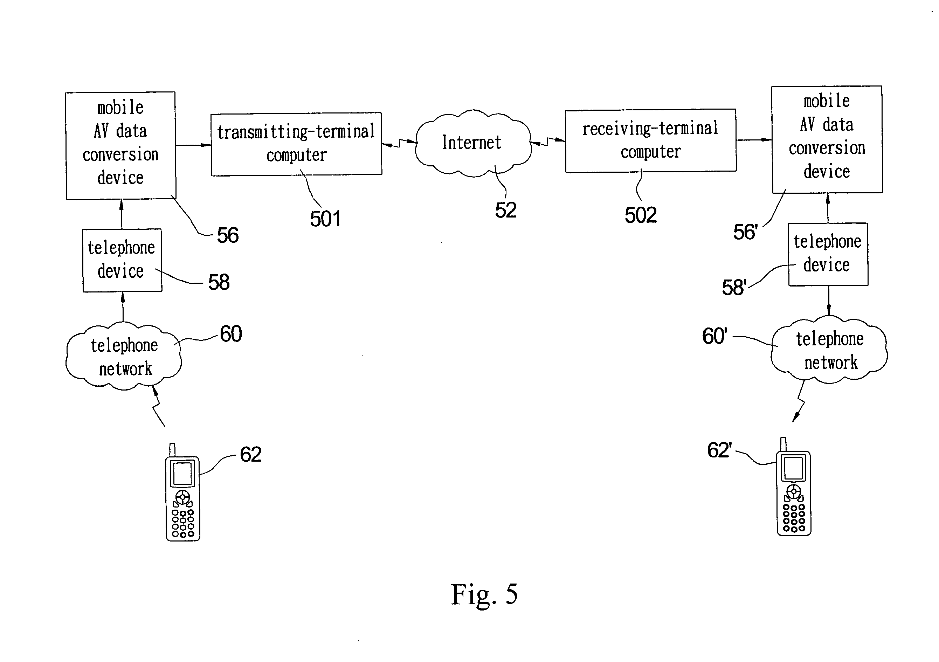

Fig. 5 is a schematic view illustrating an embodiment of the mobile AV data transmission system according to this invention. A plurality of computers is provided with transmitting terminals and receiving terminals. A suite of message exchange platform software is installed on each of the computers. A transmitting computer 501 and a receiving computer 502 are connected to each other through the Internet 52.

At the equipment with the transmitting terminal comprise a telephone device 58 of the transmitting-terminal computer 501 electrically connected with a mobile AV data conversion device 56. A signal conversion module is embedded in the conversion device 56 electrically connected to the telephone device 58 and the transmitting-terminal computer 501, which may be wired or wireless connected to the mobile AV data conversion device 56. Moreover, the receiving terminal corresponding to the transmitting terminal comprises the receiving-terminal computer 502, the mobile AV data conversion device 56', the telephone device 58', and the telephone set 58' connected to telephone network 60'. The mobile AV data conversion device 56' converts a plurality of digital signals or analog signals through the signal conversion module into a plurality of analog signals or digital signals, respectively. The mobile communication device 62' is connected to the telephone device 58' through the telephone network 60'. As shown in the embodiment, however, it is not confined in the communication of mobile communication devices 62 and 62' of two sides and the communication of general telephone sets 58, 58' of two sides that are connected to each other may be available.

Through the structure in the embodiment shown in Fig. 5, the communication between the transmitting terminal and the receiving terminal illustrated in the embodiment of Fig. 3 may be implemented to save money in remote communication, through the mobile AV data conversion device in VoIP according to this invention, and for real-time or non-real-time AV transmission.

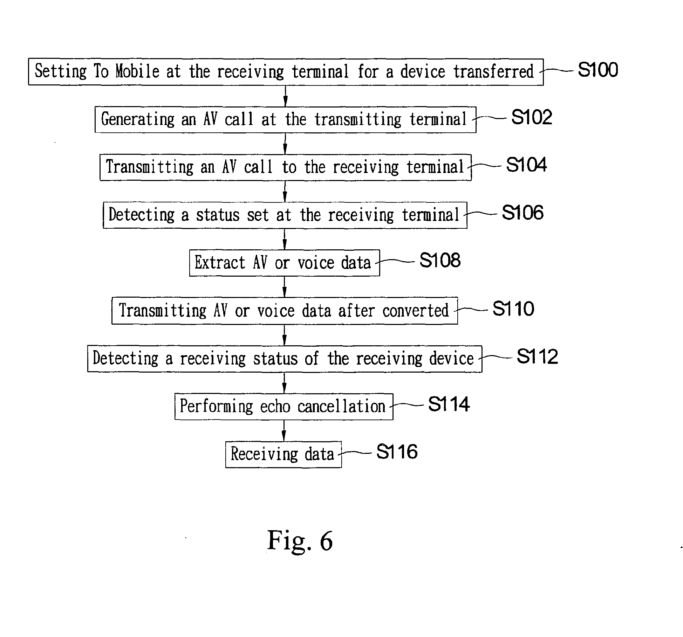

Referring now to Fig. 6 for a flow chart, a transmitting-terminal computer generates an AV call. The contents of AV call are transmitted to the receiving terminal computer through the Internet and transmitted to a mobile communication device of the receiving terminal from a mobile AV data conversion device and a telephone set. Steps in the embodiment are described below.

The receiving terminal user uses the message exchange platform software in the mobile communication device to select the "To Mobile" mode for transfer of calls to a transferred device. When an AV message comes, the AV message is transferred to the preset remote telephone device or the mobile communication device, such as a mobile phone (step S100).

The receiving terminal user uses the message exchange platform software in the transmitting terminal computer to generate an AV call that may comprise audio and video information or audio or video information. The AV call may contain an AV schedule management reminder or a video dialog message and may serve as a real-time AV or audio communication (step S102).

The suites of transmitting terminal and receiving terminal message exchange platform software are compatible with each other. Each of the exclusive numbers is respectively provided to connect to a remote server in an embodiment. In the "To Mobile" mode set at the receiving terminal, a number for transfer to a mobile communication device is provided, in which the mobile communication device may be a mobile phone, a PDA, or a mobile communication device with mobile-phone functions.

Before transmitting the contents of AV call to the receiving terminal computer, the transmitting terminal computer detects the status of the receiving terminal computer. If the receiving terminal computer is connected, the transmitting terminal computer encodes or compresses the contents of the AV call and then transmits the AV call to the receiving terminal computer through the Internet (S104). If no connection message exists in the receiving terminal computer, the AV contents may queue in the transmitting terminal computer. After the receiving terminal computer is in on-line mode, the transmitting terminal computer transmits the AV call to the receiving terminal computer.

When the receiving terminal receives the AV call, a current status set through the message exchange platform software of the receiving terminal is meanwhile detected (S106). In the embodiment, the "To Mobile" status is set and the transferred device is a mobile phone as a mobile communication device. After the receiving terminal receives the AV message, the contents of the AV call are decoded or compressed by the message exchange platform software and at least one AV or compressed voice data is extracted (step S108).

Further, according to the transfer telephone number or another ID number set through the receiving terminal message exchange platform software, the AV or voice data is transmitted through the connected mobile AV or voice data conversion device (S110), in which the mobile AV data conversion does digital-to-analog conversion plus decoding, decompression, or decryption.

Then, the message exchange platform software of the receiving terminal detects a status of the mobile communication device receiving data (step S112). For example, it detects whether the device receiving data is connected. If yes, echo cancellation is performed for audio/video quality (S114), and the AV or voice data transmitted in streams is received for real-time AV or voice communication or data receiving (S116). In contrast, if not, "busy line" information is sent to the receiving terminal and all the connections are cancelled.

Through the method mentioned above, data may be transmitted from the computer to the telephone device or mobile communication device of another terminal and real-time voice communication may further be achieved, in which a format converted by a signal conversion module in the mobile AV or voice data conversion device may be accepted by the mobile AV or voice data conversion device, and the signal conversion module converts a plurality of digital signals into a plurality of analog ones. The format converted by the mobile AV data conversion device is transmitted.

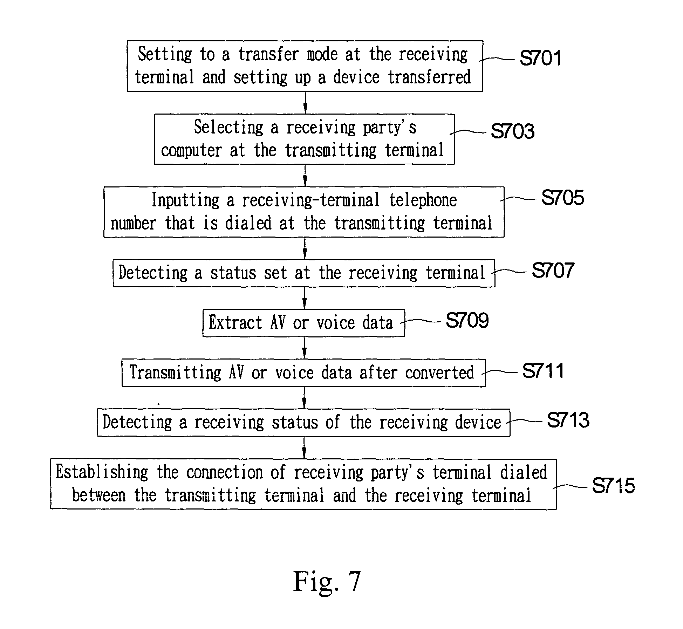

Fig. 7 is a flow chart illustrated in the embodiment of this invention in Fig. 4A, in which a connection to a receiving party terminal in advance and then an AV or voice communication is implemented.

Initially, the receiving terminal uses the transfer setup module to set up the "To Mobile" mode or the "Transfer" mode for transfer of a call from a device set at the receiving terminal to a local telephone system (S701). If the computer set for transfer to the local computer is set for "To Mobile", the transmitting terminal uses the message exchange platform software in the computer to transfer the call to a person's computer listed in the transfer table (S703). Next, the receiving party's telephone number that the receiving terminal user inputs is different from the long-distance or international call number, so according to this invention, only the local zip code is dialed (S705). A dial signal is transmitted through the Internet to the receiving terminal computer. The local computer obtains access to the Internet, while a status, such as a transfer status, set at the receiving terminal is detected (S707). Next the AV or voice data is extracted (S709) and the mobile AV data conversion device is used to convert the signal. For example, it is used to convert a digital signal into an analog one and then the converted AV or voice data is transmitted (step S711), and the user uses the telephone set connected to the mobile AV data conversion device to dial to the local telephone set. Next the receiving status of the device is detected (S713) to establish the connection of receiving party's terminal dialed between the transmitting terminal and the receiving terminal (S715).

After the connection is established, an AV or voice call is generated, in which the call information serves as a real-time AV or voice communication, and then transmitted to the receiving terminal computer through the Internet. The suites of message exchange platform software installed on the transmitting terminal and receiving terminal computers are compatible with each other so that the computers may send messages to each other. The receiving party's terminal may be a mobile communication device or a desktop telephone set.

As apparent from the flow chart in Fig. 7, the signals communicate with each other. The mobile communication device may be a mobile phone, a PDA, or a mobile communication device with mobile-phone functions. The mobile AV data conversion device according to this invention does digital-to-analog signal conversion, analog-to-digital signal conversion, and active dialing through a connected telephone set.

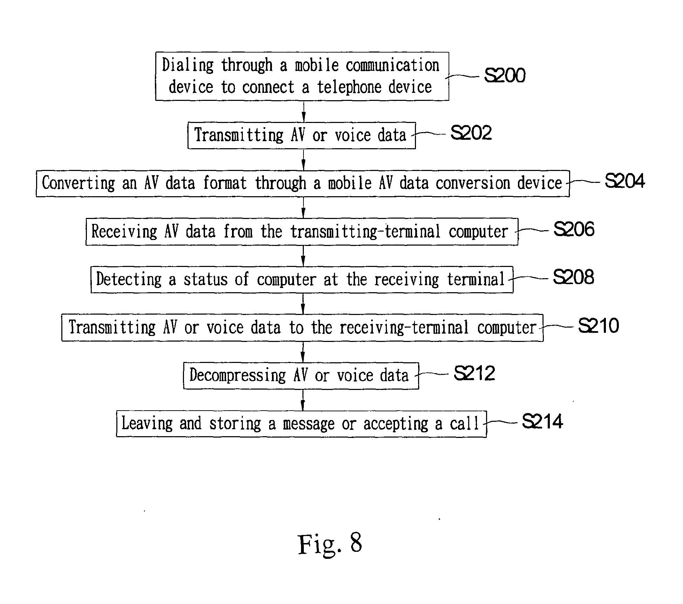

Reference is now made to the flow chart in Fig. 8. When using a mobile communication device, such as a mobile phone, the user must transmit the AV or voice message to another terminal through the Internet by the mobile AV data conversion device of transmitting terminal, such as the VoIP device. Steps are described below.

Initially, the user uses the mobile communication device to connect a telephone set through the Internet by dialing (step S200). After connection, the AV or voice data is transmitted in streams to the transmitting terminal device provided with the telephone device through PSTN (step S202), and then the data is converted by the mobile AV data conversion device and transmitted to the transmitting terminal computer. Namely, the AV or voice data is converted by the mobile AV data conversion device into digital data to be processed by a computer (step S204).

The stream data received by the transmitting terminal computer comprises AV or voice contents for real-time communication and complete AV contents stored in the device (step S206). In one embodiment of this invention, the suites of message exchange platform software compatible with each other are installed on the transmitting terminal and receiving terminal computers. Each computer has an exclusive number and is connected to others through a remote server to transmit the AV or voice data. The mobile communication device may be a mobile phone, a PDA, or a mobile communication device with mobile-phone functions. Moreover, the suites of message exchange platform software on the transmitting terminal and receiving terminal computers may detect the connection status with each other by using the exclusive number (S208).

After detecting the receiving terminal that is connected, the transmitting terminal computer transmits a message to the receiving terminal computer through the Internet (S210). After the connection is confirmed, when the real-time communication transmission is known from the message, the transmitting terminal computer transmits the audio or video packets in the format of streams to the receiving terminal in real-time and the packets are output by an audio or video device. If it is not a real-time communication transmission, such as the voice or AV messages, it may be transmitted to the receiving terminal, after the transmitting terminal computer receives the AV data, in order to connect the audio or video output of the receiving-terminal computer. In contrast, if the result given after the message is detected shows a failure in connection, the message delivery stops and the telephone hangs up.

In the present invention, at the step of detecting the status of transmitting terminal and receiving terminal, the detected packets may be mutually sent between the two terminals. After the connection is established, the data receiving mode may be converted by adjusting the status of mobile AV data conversion device, such as a voice conversation mode, a mute mode, a message-leaving mode. The voice data input from the mobile AV data conversion device is compressed. The voice conversation mode is converted by a signal conversion module embedded in the mobile AV data conversion device. The signal conversion module converts a plurality of digital signals into a plurality of analog ones.

Next, the compressed voice data is transmitted to a specified receiving terminal computer and then decompressed or decrypted in consideration of security (S212). A message-leaving is performed, in which the AV or voice may be stored, or the message is accepted (S214).

According to this invention, the mobile audio/video (AV) data transmission system and method for the same may transmit AV or voice data through the mobile AV data conversion device to the AV I/O device from a mobile communication device such as, for example, a mobile phone, to a mobile phone from a PC, or to a mobile phone from a mobile phone. By using a general telephone device connected to the mobile communication device through dialing, the mobile AV data conversion device, such as the VoIP device, is used to convert the digital signal to be transmitted into analog signal and then transmitted to the mobile communication device through the Internet or telephone network for achievement of AV message transmission and personal use.

In the description mentioned above, only the preferred embodiments according to this invention are provided without limit to this invention and the characteristics of this invention; all those skilled in the art without exception should include the equivalent changes and modifications as falling within the true scope and spirit of the present invention.

## Claims

1. A method of transmitting mobile audio/video (AV) data, transmitting AV call information comprising AV or voice data to a receiving terminal through a receiving terminal computer, a mobile AV data conversion device, and a telephone device, the mobile AV data conversion device being connected to the receiving terminal computer and the telephone device, comprising:
setting a "To Mobile" mode through a suite of message exchange platform software embedded in the transmitting terminal computer;
generating the AV call from a transmitting terminal computer;
transmitting the AV call to the receiving-terminal computer through the Internet;
detecting a status set at the receiving terminal;
extracting AV or voice data from the AV call;
converting the AV call through a mobile AV data conversion device;
transmitting the converted AV or voice data; and
making a real-time AV or voice communication or receiving the AV or voice data.

2. The method of transmitting mobile AV data according to claim 1, wherein the AV call information contains an AV schedule management reminder or a video dialog message.

3. The method of transmitting mobile AV data according to claim 1, wherein the AV call information serves as a real-time AV or voice communication.

4. The method of transmitting mobile AV data according to claim 1, wherein suites of message exchange platform software compatible with each other are installed on the transmitting terminal and receiving-terminal computers.

5. The method of transmitting mobile AV data according to claim 4, wherein each of the suites of message exchange platform software on the transmitting terminal and receiving terminal computers has an exclusive number.

6. The method of transmitting mobile AV data according to claim 1, wherein the receiving terminal is a mobile communication device.

7. The method of transmitting mobile AV data according to claim 1, wherein the "To Mobile" mode set on the message exchange platform software comprises a number of a phone call transferred to the mobile communication device.

8. The method of transmitting mobile AV data according to claim 6, wherein the mobile communication device is a mobile phone, a PDA, or a mobile communication device with mobile-phone functions.

9. The method of transmitting mobile AV data according to claim 7, wherein the step of a telephone number set on the message exchange platform software comprises steps of:
detecting whether the mobile communication device at the transmitting terminal is connected; and
performing echo cancellation.

10. The method of transmitting mobile AV data according to claim 1, wherein at the step of detecting the receiving status of the receiving terminal, if yes, echo cancellation is performed and then real-time AV or voice communication or data receiving is performed, and if not, "busy line" information is sent to the receiving terminal and all connections are cancelled.

11. The method of transmitting mobile AV data according to claim 1, wherein at the step of converting the AV or voice data, the mobile AV data conversion device converts data for a format accepted by the mobile communication device.

12. The method of transmitting mobile AV data according to claim 11, wherein the format accepted by the mobile AV data conversion device is converted by a signal conversion module in the mobile AV data conversion device.

13. A method of transmitting mobile audio/video (AV) data, transmitting AV call information comprising AV or voice data to a receiving terminal through a receiving-terminal computer, a mobile AV data conversion device, and a telephone device, comprising:
setting a transfer mode and a device to be transferred by the receiving terminal through a transfer setup module located in a transmitting-terminal computer;
selecting a receiving-terminal computer for transfer use;
inputting a receiving party's telephone number of the receiving terminal;
detecting a status set at the receiving terminal;
transmitting a dial signal of the receiving party's telephone number to a receiving-terminal computer through the Internet;
extracting the AV or voice call information;
converting the signal through the mobile AV data conversion device;
dialing a local telephone set through the telephone set connected to the mobile AV data conversion device; and
establishing a connection.

14. The method of transmitting mobile AV data according to claim 13, wherein the mobile AV data conversion device does digital-to-analog signal conversion, analog-to-digital signal conversion, and active dialing through a connected telephone set.

15. The method of transmitting mobile AV data according to claim 13, wherein the transmitting-terminal computer and the receiving terminal computer obtain access to the Internet.

16. The method of transmitting mobile AV data according to claim 13, wherein the AV call information serves as a real-time AV or voice communication.

17. The method of transmitting mobile AV data according to claim 13, wherein suites of message exchange platform software compatible with each other are installed on the transmitting-terminal and receiving-terminal computers.

18. The method of transmitting mobile AV data according to claim 13, wherein the receiving terminal is a mobile communication device.

19. The method of transmitting mobile AV data according to claim 18, wherein the mobile communication device is a mobile phone, a PDA, or a mobile communication device with mobile-phone functions.

20. A method of transmitting mobile AV data, transmitting AV streams from a transmitting-terminal mobile communication device to a receiving-terminal computer and an AV I/O device through a telephone device, a mobile AV data conversion device, and a transmitting-terminal computer, wherein a suite of message exchange platform software on the receiving-terminal computer is set for an online mode, comprising:
establishing a connection between a mobile communication device and the telephone device;
transmitting AV or voice data;
converting an AV or voice data format through the mobile AV data conversion device;
receiving the AV or voice data from the transmitting-terminal computer;
detecting a status of the receiving-terminal computer;
transmitting the AV or voice data to the receiving-terminal computer through the Internet; and
leaving and storing a message or accepting a call.

21. The method of transmitting mobile AV data according to claim 20, wherein the AV or voice data is transmitted in streams.

22. The method of transmitting mobile AV data according to claim 20, wherein the AV or voice data is transmitted to the telephone device through the Internet.

23. The method of transmitting mobile AV data according to claim 20, wherein each of the suites of message exchange platform software on the transmitting terminal and receiving terminal computers has an exclusive number.

24. The method of transmitting mobile AV data according to claim 20, wherein the mobile communication device at the transmitting terminal is a mobile phone, a PDA, or a mobile communication device with mobile-phone functions.

25. The method of transmitting mobile AV data according to claim 20, wherein the methods is used to check whether the receiving terminal computer is in an on-line mode, wherein if yes, a step of transmission is carried out, and if not, the transmission is stopped and data transmitted queues in the transmitting-terminal computer.

26. The method of transmitting mobile AV data according to claim 20, wherein the step of transmitting the AV or voice data further comprises a step of waiting for a feedback message from the receiving-terminal computer.

27. The method of transmitting mobile AV data according to claim 20, wherein the mobile AV or voice data conversion device compresses or decrypts the AV or voice data.

28. A mobile AV data transmission system, transmitting the mobile AV or voice data in real time between a transmitting-terminal user and a receiving-terminal user, comprising:
a plurality of transmitting-terminals and receiving-terminals, wherein computers are connected with each other through the Internet;
a message exchange platform software installed on the computer;
at least one mobile AV data conversion device electrically connected to the computer to convert AV signals;
a signal conversion module embedded in the mobile AV data conversion device;
at least one telephone device electrically coupled to the mobile AV data conversion device in the computer; and
a plurality of mobile communication device connected to the telephone device through a plurality of telephone networks.

29. The mobile AV data transmission system according to claim 28, wherein the mobile communication device is a mobile phone, a PDA, or a mobile communication device with mobile-phone functions.

30. The mobile AV data transmission system according to claim 28, wherein the computer is wiredly or wirelessly connected to the mobile AV data conversion device.

31. The mobile AV data transmission system according to claim 28, wherein the telephone network is PSTN or ISDN.

32. The method of transmitting mobile AV data according to claim 28, wherein a transfer setup module is provided in the transmitting-terminal computer to set up the transfer function.
